Europäisches Patentamt

European Patent Office

Office européen des brevets

(11) Publication number: **0 208 124**
**A2**

# EUROPEAN PATENT APPLICATION

(21) Application number: 86107370.8

(51) Int. Cl.⁴: **H02K 37/00**

(22) Date of filing: 28.09.83

(30) Priority: 28.09.82 US 426188

(43) Date of publication of application:
**14.01.87 Bulletin 87/03**

(60) Publication number of the original application in
accordance with Art.76 EPC: **0 106 595**

(84) Designated Contracting States:
**AT BE CH DE FR GB IT LI LU NL SE**

(71) Applicant: **Yang, Tai-Her**
**5-1 Tay Pyng St.**
**Shi Hwu Jenn Jang Huah Shiann(TW)**

(72) Inventor: **Yang, Tai-Her**
**5-1 Tay Pyng St.**
**Shi Hwu Jenn Jang Huah Shiann(TW)**

(74) Representative: **Arthur, Bryan Edward et al**
**4 Dyers Buildings Holborn**
**London, EC1N 2JT(GB)**

(54) Improvement in stepper motors.

(57) The rotor of a stepper motor comprises a tooth-
ed cup or plate (1-2) of soft iron surrounding a
freely-rotatable permanent magnet (1-7).

FIG.1.

## IMPROVEMENT IN STEPPER MOTORS

The present invention relates to stepper motors, and provides an improved stepper motor in low inertia.

This application is divided out of European patent application EP 83305856.3, publication number 0106595.

The invention is defined in the claims appended hereto, and will be described with reference to the accompanying drawings, in which:

Fig.1 shows the structure of a cup-shaped stepper rotor having low inertia.

1-1 Axle.

1-2 Cup-shaped rotor.

1-3 Lock screw.

1-4 Bearing ball.

1-5 Inner collar of bearing.

1-6 Outer collar of bearing.

1-7 Ring-shaped permanent magnet.

1-8 Air gap.

Fig.2 shows the front view of a cup-shaped stepper rotor having low inertia.

2-1 Axle.

2-2 Cup-shaped rotor.

2-3 Lock screw.

Fig.3 shows the structure of a flat plate-shaped stepper rotor.

3-1 Axle

3-2 Flat plate-shaped rotor.

3-3 Lock screw.

3-4 Bearing ball.

3-5 Inner collar of bearing.

3-6 Outer collar of bearing.

3-7 Ring-shaped permanent magnet.

3-8 Air gap.

Fig. 4 shows the side view of the flat plate-shaped stepper rotor.

4-1 Axle.

4-2 Flat plate-shaped rotor.

4-3 Lock screw.

Fig. 5 shows the structure of a cone-shaped stepper rotor.

5-1 Axle.

5-2 Cone-shaped rotor.

5-3 Lock screw.

5-4 Bearing ball.

5-5 Inner collar of bearing.

5-6 Outer collar of bearing.

5-7 Ring-shaped permanent magnet.

5-8 Air gap.

Fig. 6 shows a concave type of cone-shaped stepper rotor.

6-1 Axle.

6-2 Concave and cone-shaped rotor.

6-3 Lock screw.

6-4 Bearing ball.

6-5 Inner collar of bearing.

6-6 Outer collar of bearing.

6-7 Ring-shaped permanent magnet.

6-8 Air gap.

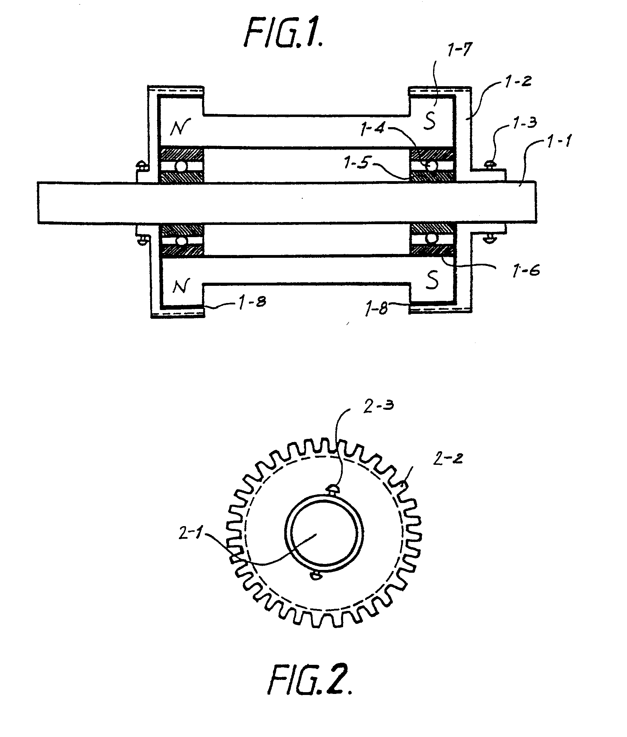

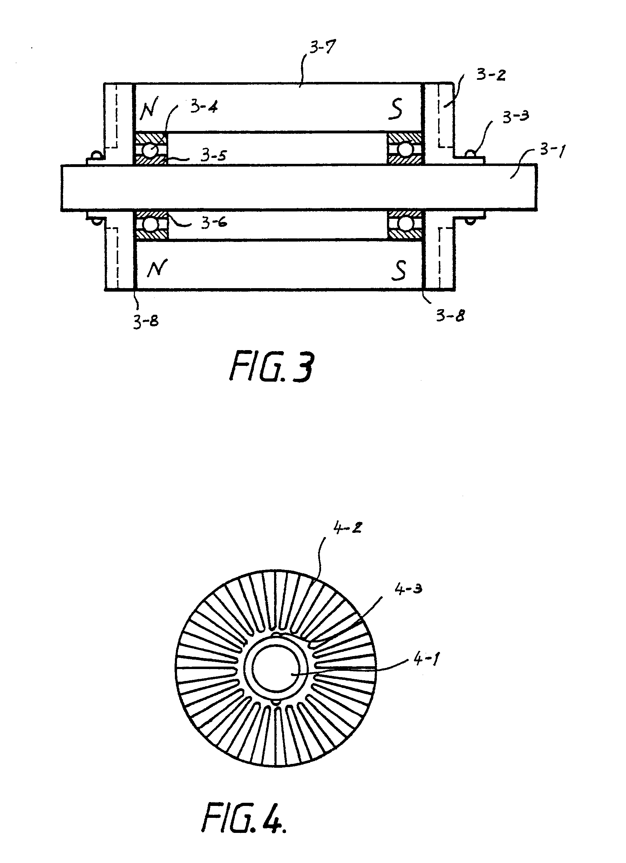

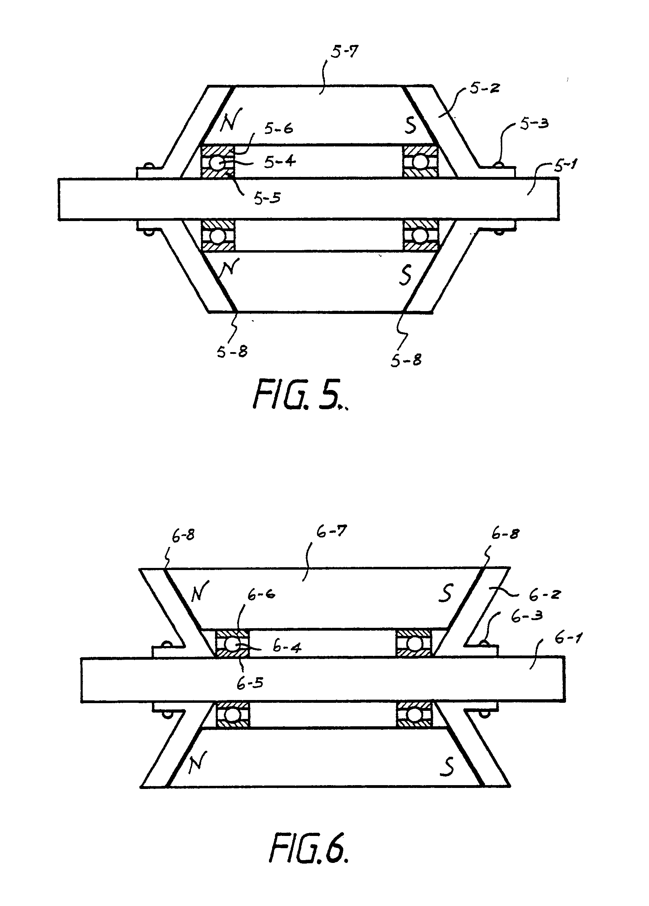

A cup-shaped rotor stepper motor with low inertia and high frequency response is shown in Fig. 1; Fig. 2 shows a front view of the cup-shaped magnetic conductor. A motor according to this invention may be used in a machine tool as described in the parent specification, or other mechanical device, and in general industrial servo-drive means. It comprises a conventional stepper motor stator, a cup-shaped rotor (1-2), and the related mechanical parts; the novel feature of the cup-shaped rotor system (1-2) is that it comprises two or more than sets of cup-shaped rotors having a selected size and number of teeth around its outer circumference, and an output shaft to form a rotor assembly, in which the angle relation between the salient teeth is determined by the corresponding structure of the stator. Said cup-shaped rotor assembly is to be excited with a permanent magnet (1-7) that is mounted on the output shaft by bearings, and between said permanent magnet (1-7) and the cup-shaped rotor assembly, a suitable play is furnished; therefore, when said cup-shaped rotor assembly is driven by the stator to rotate the output shaft, the permanent magnet (1-7) will only be subject to friction damping mechanical force, so that the mechanical inertia of the rotor assembly is lowered and high frequency response improved. Fig. 3 to 6 shows other embodiments of this design, in which the rotor may be flat or conical, but the operation and functions are the same as those shown in Fig. 1 and 2.

**Claims**

1. A stepper motor having a rotor system comprising a pair of toothed rotors (1-2) of soft magnetic material fixed to the rotor shaft (1-1) and a permanent magnet (1-7) freely rotatable on the rotor shaft, the rotors and permanent magnet being so arranged that the rotor act as pole-pieces for the magnet, being separated from it by an air-gap (1-8) sufficient to allow free rotation.

2. A stepper motor according to Claim 1, in which the permanent magnet is a cylinder (1-7) of magnetic material mounted on ball-bearings (1-4, 1-5, 1-6) on the rotor shaft.

3. A stepper rotor according to Claim 1 or Claim 2, in which the rotors (1-2) are cup-shaped with the teeth formed on the circumferential surface.

4. A stepper motor according to Claim 1 or Claim 2, in which the rotors are shaped as flat or conical discs, with the teeth on the surfaces facing radially outwards.

# FIG.1.

# FIG.2.

FIG. 3

FIG. 4.

FIG. 5.

FIG.6.